# EUROPEAN PATENT SPECIFICATION

(11) **EP 0 901 595 B1**
(45) Date of publication and mention of the grant of the patent: **28.05.2003**
(21) Application number: 97929792.6
(22) Date of filing: 04.06.1997
(51) Int. Cl.: F16L 55/04, F15B 1/22

(54) **A NOVEL ACCUMULATOR**
AKKUMULATOR
NOUVEL ACCUMULATEUR

(30) Priority: 05.06.1996 US 660676
(43) Date of publication of application: 17.03.1999
(73) Proprietor: Loran, Haim, Millington, NJ 07946 (US)
(72) Inventor: Loran, Haim, Millington, NJ 07946 (US)
(74) Representative: Needle, Jacqueline
(86) International application number: PCT/US97/09677
(87) International publication number: WO 97/046823

(56) References cited:
- GB-A- 2 156 435
- US-A- 3 336 948
- US-A- 4 112 978
- US-A- 4 461 322
- US-A- 4 691 739
- US-A- 4 997 009
- US-A- 5 388 899

## Description

The present invention relates to an accumulator.

When hydraulic accumulators discharge their working fluid, the dynamic gas/fluid separating device, consisting of a bellows or piston, is placed in a condition of high steady state stress. This stress is due to the force created by the gas pre-charge pressure present on one side of the separator and the actual lower-working pressure on the expelled fluid side. Further, high point contact loads may exist where the separator mechanically stops on the accumulator vessel structure.

The foregoing conditions must be considered by the designer, especially in high performance driven applications where weight of the unit and operating life are major factors. One factor must be compromised with the other.

Accumulators are used for two separate functions in the standard hydraulic system. The first is to store energy in the form of compressed gas and hydraulic fluid. The second is to absorb pressure spikes which occur when a component in the hydraulic system actuates or performs work. Both of these applications require the use of a compressible fluid (gas, i.e. nitrogen, helium, air etc.) on one side of a separator and a non-compressible fluid (hydraulic oil) on the other side. When the hydraulic system pressure drops below the precharged pressure of the gas side, the separator will move in the direction of the hydraulic side, displacing stored hydraulic fluid into the system as required. When the hydraulic system is shut down, the separator goes to the full stroke stopped position and the full pre-charge pressure is applied to the area of the separator, thereby inducing a stress in this member. When fully bottomed, this load is also applied to the stopping mechanism, which creates a localized high stress area in the shell.

Localized high stressed concentrations, in either the fluid separator or the surrounding shell, resulting from the separator being bottomed on the hydraulic end of the shell cause fatigue and a short life span for the shell.

With both of the above stress conditions, the noted stresses can be addressed by material selection and/or material thickness and physical geometry. Typically, both of these approaches can add considerable weight to the final design solution and, in many cases, reduce the entire overall performance, as a result of the weight penalty, or of the entire operating system.

Examples of prior art accumulators include:
US Patent No.2,745,357 which introduces an aircraft hydraulic system with an improved pressure type reservoir;
US Patent No. 4,601,369 which describes a pressure vessel;
US Patent No. 4,852,615 which teaches a hydropneumatic accumulator with two chambers;
US Patent No. 4,959,958 which shows a hydraulic pressure system for supplying a fluid under pressure in combination with a gas chamber;
US Patent No. 5,009,066 which deals with an automotive power steering system; and
US Patent No. 5,036,661 which shows a regulated level accumulator for liquid under high pressure.

US 4,997,009 describes an accumulator comprising:
a hollow housing;
a bellows located inside the housing, said bellows including a bellows body having a first end and a second end, said first end being secured to the housing and said second end being allowed to move in an axial direction of the housing;
the bellows being attached to a piston for closing the second end of the bellows body;
a liquid chamber defined by an inner face of said bellows body and a rear wall of said piston and filled with a liquid, said rear wall of the piston having a protruding centre;
a gas chamber defined by an outer face of the bellows body and said piston and charged with a compressed gas;
a tube seat having a liquid flow port communicating with the liquid chamber and allowing liquid in the liquid chamber to pass when the bellows is compressed or expanded, and a first set of shoulders at a forward end of said tube seat; and
a self-seal mechanism.

According to a first aspect of the present invention, an accumulator as defined above is characterised in that:
the self-seal mechanism comprises an arrow-shaped poppet having a shaft, a contact pin, and an outer tail end in an axial position opposite the contact pin, said contact pin being received in the shaft and connected to an inner compressible spring and being directly opposite said rear protruding centre of said piston, said outer tail end having a second set of shoulders arranged to come into contact with the first set of shoulders at the forward end of the tube seat, the second set of shoulders comprising a seal retainer and a seal, the seal being arranged to seat on said first set of shoulders when gas in the gas chamber forces said piston axially to contact and move the contact pin in a direction to compress the inner compressible spring, the said movement of the piston causing the bellows to be deformed in its axial direction to a predetermined extent;
the compression of the inner compressible spring compressing an outer spring which is attached to the outer tail end of the poppet in an axial position opposite said contact pin, and the said movement of the piston pushing the outer tail end to seat on and seal the tube seat to define a closed position of the self-seal mechanism in which liquid is caused to stop flowing from the liquid chamber;
said self-seal mechanism, in its closed position, confining part of the liquid in the liquid chamber to a region inside the bellows;
said outer spring being arranged to act as a return spring in opposition to said inner spring and to enable the seal of the tube seat to be opened by hydraulic pressure from the liquid whereby the bellows is expanded and pushes the piston in an axial direction to compress the gas in said gas chamber.

GB 2,156,435 describes an accumulator comprising:
a hollow housing;
a piston located inside the housing; said piston being flush with the interior wall of said housing and sealed by an "O" ring;
said piston separating a gas chamber from a liquid chamber;
said liquid chamber being defined by the interior wall of the housing and a rear wall of said piston, said rear wall of said piston having a protruding centre;
said gas chamber being defined by the interior wall of said housing and a forward side of said piston and charged with compressed gas;
a tube seat having a liquid flow port communicating with the liquid chamber and allowing liquid into and from the liquid chamber, said tube seat having a first set of shoulders at a forward end of said tube seat, and
a self-seal mechanism.

According to a second aspect of the present invention, an accumulator as described above is characterised in that:
the self-seal mechanism comprises an arrow-shaped poppet having a shaft, a contact pin, and an outer tail end in an axial position opposite the contact pin, said contact pin being received in the shaft and connected to an inner compressible spring and being directly opposite said rear protruding centre of said piston, said outer tail end having a second set of shoulders arranged to come into contact with the first set of shoulders at the forward end of the tube seat, the second set of shoulders comprising a seal retainer and a seal, the seal being arranged to seat on said first set of shoulders when gas in the gas chamber forces said piston axially to contact and move the contact pin in a direction to compress the inner compressible spring, the said movement of the piston being to a predetermined extent;
the compression of the inner compressible spring compressing an outer spring which is attached to the outer tail end of the poppet in an axial position opposite said contact pin, and the said movement of the piston pushing the outer tail end to seat on and seal the tube seat to define a closed position of the self-seal mechanism in which liquid is caused to stop flowing from the liquid chamber;
said self-seal mechanism, in its closed position, confining part of the liquid in the liquid chamber to a region inside the liquid chamber between the first set of shoulders and the rear wall of the piston;
said outer spring being arranged to act as a return spring in opposition to said inner spring and to enable the seal of the tube seat to be opened by hydraulic pressure from the liquid whereby the piston is pushed in an axial direction to compress the gas in said gas chamber.

Embodiments of the present invention reduce problems found in known designs by the introduction of a valve mechanism. The valve mechanism can be designed so as to sense the relative position of the separator (piston), and to limit the expelled fluid volume of the accumulator, to obtain pressure equilibrium across the separator. This can be achieved by capturing enough fluid in the hydraulic side of the accumulator to keep the separator from just short of its bottoming position, thereby equalizing the pressure on both sides of the separator. This, in turn, reduces the stress levels attributable to the pressure loading of the separator, such that the high contact loads on the static housing are eliminated. Use of such a valve mechanism would prevent the fluid pressure from falling below the gas pre-charge pressure and would prevent the separator from physically bottoming on the hydraulic shell, resulting in a uniformly distributed pressure loading of the hydraulic shell. This mechanism may be used in a static vessel, dynamic piston (separator) or as a separate system interfacing with the accumulator.

Embodiments of the present invention will hereinafter be described, by way of example, with reference to the accompanying drawings, in which:
Figure 1 is a cross section of an accumulator using a bellows as a separator of gas and fluid chambers;
Figure 2 is a cross section of an alternative accumulator having a piston as a separator of gas and fluid chambers, and showing a poppet in a sealed position;
Figure 3 is a cross section of the accumulator with a piston as in Figure 2 showing the poppet in its open position; and
Figure 4 shows in cross section a detail of the tail end of the poppet in the open position.

### DETAILED DESCRIPTION OF THE PREFERRED EMBODIMENT OF THE INVENTION

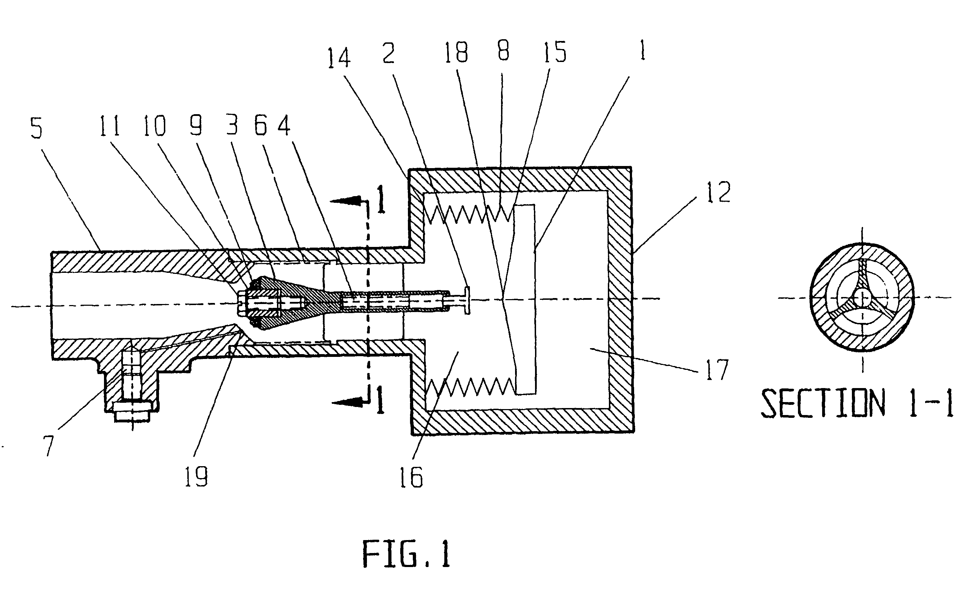

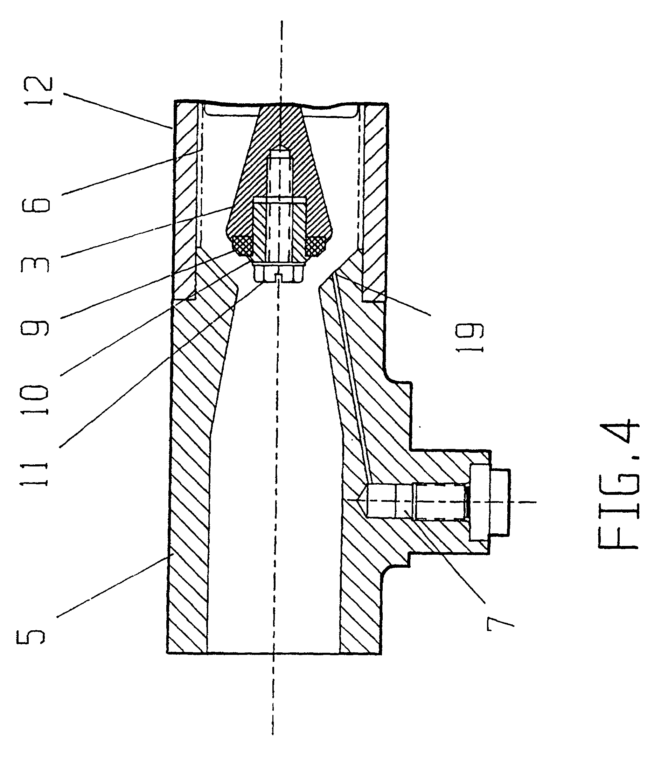

The first embodiment of the invention is shown in Figure 1 and Figure 4 and will now be described.

This embodiment is the preferred embodiment of the invention. It is important to note that the poppet described in Figures 1, 2, 3, 4, 6, 9, 10 and 11 is the point of the invention. The addition of this poppet to the accumulator design permits control of the expelled fluid such that the fluid side pressure will not be below the gas pre-charge pressure. This valve sealing mechanism will allow the piston to travel to a position of pressure equilibrium and will prevent contact loads from being transferred to the vessel permitting the sealing prior to the piston achieving the fully stroked position, eliminating contact stress with the vessel.

Referring to Figure 1, as the pressure in the hydraulic system exceeds the gas pressure, the return spring (6) will apply force to the valve mechanism to return it to an open position. The return spring (6) is attached to poppet (3) which when opened allows hydraulic flow into the liquid chamber (16) compressing the gas in the gas chamber (17) of the accumulator chamber (12). This hydraulic flow expands the bellows (8) moving the protruding center (18) of the rear wall of the piston (1) away from the contact pin (2) of the poppet (3) compressing the gas in the gas chamber (17).

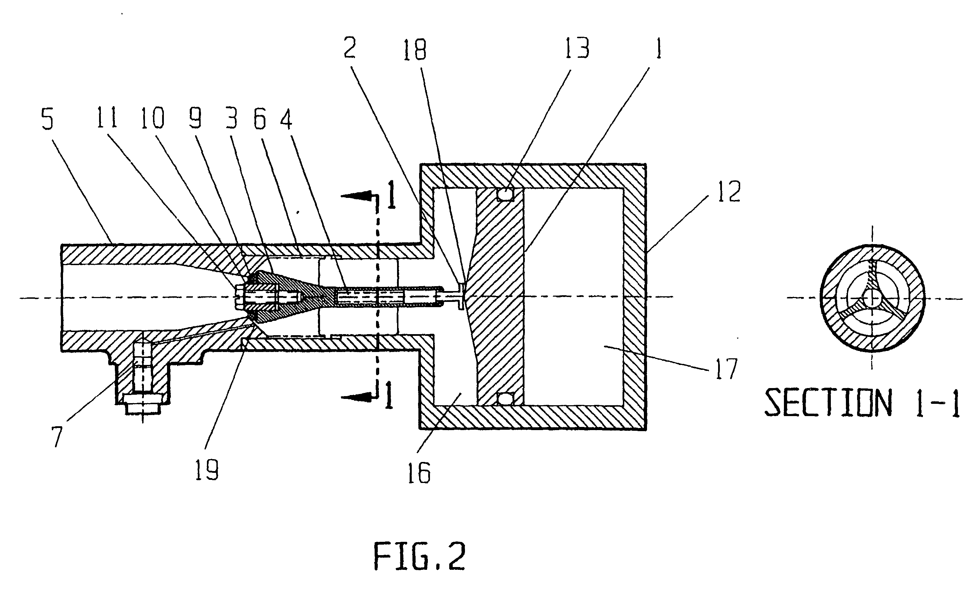

Referring to Figure 2, as the piston (1) strokes to a predetermined position or gas volume in the gas chamber (17) its protruding center (18) contacts the contact pin (2) which then compresses the contact pin spring (4) forcing the poppet (3) to seal the fluid chamber with the poppet seal (9) held by seal retainer (10) with the seal retainer screw (11) to the poppet (3) seals the fluid chamber by coming into contact with the shoulders (19) of the valve seat (5). On the lower portion of the valve seat (5) is a pressure test port (7) which is used to check the hydraulic pressure of the system and whether the poppet seal (9) is properly sealed. At full discharge of the accumulator, the hydraulic pressure between the poppet seal (9) and the piston (1) in the liquid chamber (16) equals the pressure in the gas chamber (17).

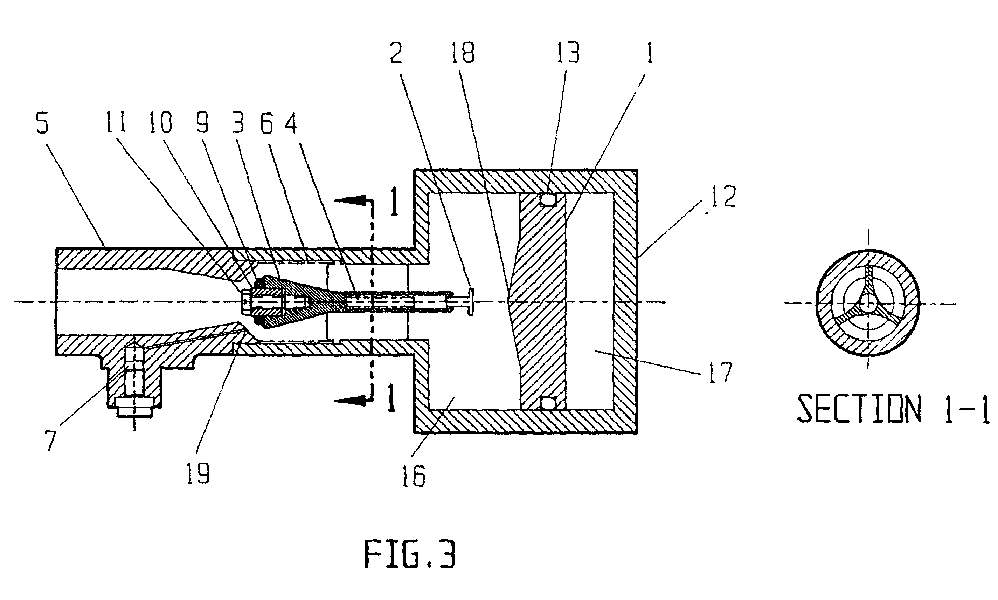

An alternative embodiment of the invention is demonstrated in Figure 2 and Figure 3. Therein, bellows are replaced by the piston (1). The piston (1) acts as a separator between the liquid chamber (16) and the gas chamber (17) with the piston (1) flush with the interior walls of the accumulator housing (12), sealed by "O" ring (13). The principles and operation of the accumulator so designed is the same with the exception of the replacement for the bellows (8).

Figure 2 shows the poppet seal, in the closed position, with the (9) seal and seal retainer (10) resting on the shoulders (19) of the seal valve to stop the fluid flow to the liquid chamber (16) when the pressure in the liquid chamber (16) is equal to the pressure in the gas chamber (17).

Figure 4 is a cut away portion of the poppet (3) in its open position to allow fluid to flow into the liquid chamber (16) wherein the return spring (6) is acting in opposition to compression spring (4) pushing out the contact pin (2) to push out piston (1) to compress the gas in the gas chamber (17).

Also shown are the seal retainer (10) and seal (9) on the poppet (3) held together by seal retainer screw (11) away and from the shoulder away and from the shoulders (19) of the seat valve (5) in the open position.

### DETAILED ADVANTAGE & UNIQUE POINTS OF THE INVENTION

The point of present invention is the introduction of the poppet valve design to seal the fluid chamber prior to the piston reaching the fully stroked position. This unique design prevents the piston from being subjected to the full pre-charge load during cycling.

An additional benefit of this valve mechanism is the establishment of an equilibrium position with the spring loaded poppet valve design providing an integral pressure relief feature due to pressure changes associated with temperature changes in the system.

The foregoing features introduced by this unique poppet valve system decrease fatigue and wear and tear on the system, thereby increasing the longevity of the accumulator.

## Claims

1. An accumulator comprising:
a) a hollow housing;
b) a bellows (8) located inside the housing, said bellows including a bellows body having a first end (14) and a second end (15), said first end (14) being secured to the housing and said second end (15) being allowed to move in an axial direction of the housing;
c) the bellows (8) being attached to a piston (1) for closing the second end (15) of the bellows body;
d) a liquid chamber (16) defined by an inner face of said bellows body and a rear wall of said piston (1) and filled with a liquid, said rear wall of the piston (1) having a protruding centre (18);
e) a gas chamber (17) defined by an outer face of the bellows body and said piston (1) and charged with a compressed gas;
f) a tube seat (5) having a liquid flow port communicating with the liquid chamber (16) and allowing liquid in the liquid chamber to pass when the bellows (8) is compressed or expanded, and a first set of shoulders at a forward end of said tube seat (5); and
g) a self-seal mechanism (2, 3, 4, 6, 9, 10 and 11);
the accumulator being **characterised in that**:
the self-seal mechanism (2, 3, 4, 6, 9, 10, and 11) comprises an arrow-shaped poppet (3) having a shaft, a contact pin (2), and an outer tail end in an axial position opposite the contact pin (2), said contact pin (2) being received in the shaft and connected to an inner compressible spring (4) and being directly opposite said rear protruding centre (18) of said piston (1), said outer tail end having a second set of shoulders arranged to come into contact with the first set of shoulders at the forward end of the tube seat (5), the second set of shoulders comprising a seal retainer (10) and a seal (9), the seal being arranged to seat on said first set of shoulders (19) when gas in the gas chamber (17) forces said piston axially to contact and move the contact pin (2) in a direction to compress the inner compressible spring (4), the said movement of the piston (1) causing the bellows to be deformed in its axial direction to a predetermined extent;
the compression of the inner compressible spring (4) compressing an outer spring (6) which is attached to the outer tail end of the poppet (3) in an axial position opposite said contact pin (2), and the said movement of the piston (1) pushing the outer tail end to seat on and seal the tube seat (5) to define a closed position of the self-seal mechanism in which liquid is caused to stop flowing from the liquid chamber (16);
said self-seal mechanism, in its closed position, confining part of the liquid in the liquid chamber (16) to a region inside the bellows (8);
said outer spring (6) being arranged to act as a return spring in opposition to said inner spring (4) and to enable the seal of the tube seat (5) to be opened by hydraulic pressure from the liquid whereby the bellows (8) is expanded and pushes the piston (1) in an axial direction to compress the gas in said gas chamber (17).

2. An accumulator comprising:
a) a hollow housing;
b) a piston (1) located inside the housing; said piston (1) being flush with the interior wall of said housing and sealed by an "O" ring (13);
c) said piston (1) separating a gas chamber (17) from a liquid chamber (16);
d) said liquid chamber (16) being defined by the interior wall of the housing and a rear wall of said piston (1), said rear wall of said piston having a protruding centre (18);
e) said gas chamber (17) being defined by the interior wall of said housing and a forward side of said piston (1) and charged with compressed gas;
f) a tube seat (5) having a liquid flow port communicating with the liquid chamber (16) and allowing liquid into and from the liquid chamber (16), said tube seat (5) having a first set of shoulders (19) at a forward end of said tube seat (5), and
g) a self-seal mechanism (2, 3, 4, 6, 9, 10 and 11);
the accumulator being **characterised in that**:
the self-seal mechanism (2, 3, 4, 6, 9, 10 and 11) comprises an arrow-shaped poppet (3) having a shaft, a contact pin (2), and an outer tail end in an axial position opposite the contact pin (2), said contact pin (2) being received in the shaft and connected to an inner compressible spring (4) and being directly opposite said rear protruding centre (18) of said piston (1), said outer tail end having a second set of shoulders arranged to come into contact with the first set of shoulders at the forward end of the tube seat (5), the second set of shoulders comprising a seal retainer (10) and a seal (9), the seal being arranged to seat on said first set of shoulders (19) when gas in the gas chamber (17) forces said piston axially to contact and move the contact pin (2) in a direction to compress the inner compressible spring (4), the said movement of the piston (1) being to a predetermined extent;
the compression of the inner compressible spring (4) compressing an outer spring (6) which is attached to the outer tail end of the poppet (3) in an axial position opposite said contact pin (2), and the said movement of the piston (1) pushing the outer tail end to seat on and seal the tube seat (5) to define a closed position of the self-seal mechanism in which liquid is caused to stop flowing from the liquid chamber (16);
said self-seal mechanism, in its closed position, confining part of the liquid in the liquid chamber (16) to a region inside the liquid chamber (16) between the first set of shoulders (19) and the rear wall of the piston (1);
said outer spring (6) being arranged to act as a return spring in opposition to said inner spring (4) and to enable the seal of the tube seat (5) to be opened by hydraulic pressure from the liquid whereby the piston (1) is pushed in an axial direction to compress the gas in said gas chamber (17).

## Patentansprüche

1. Akkumulator umfassend:
a) ein hohles Gehäuse;
b) einen Balg (8), der innerhalb des Gehäuses angeordnet ist, wobei der Balg einen Balgkörper mit einem ersten Ende (14) und einem zweiten Ende (15) hat, wobei das erste Ende (14) an dem Gehäuse befestigt ist und das zweite Ende (15) sich in eine axiale Richtung des Gehäuses bewegen kann;
c) wobei der Balg (8) an einem Kolben (1) befestigt ist, um das zweite Ende (15) des Balgkörpers zu schließen;
d) eine Flüssigkeitskammer (16), die durch eine Innenfläche des Balgkörpers und eine Rückwand des Kolbens (1) begrenzt und mit einer Flüssigkeit gefüllt ist, wobei die Rückwand des Kolbens (1) ein vorstehendes Zentrum (18) hat;
e) eine Gaskammer (17), die von einer Außenfläche des Balgkörpers und dem Kolben (1) begrenzt ist und mit einem komprimierten Gas gefüllt ist;
f) einen Rohrsitz (5), der eine Flüssigkeitsflussöffnung, die mit der Flüssigkeitskammer (16) in Verbindung steht und Flüssigkeit in der Flüssigkeitskarnmer passieren lässt, wenn der Balg (8) komprimiert oder expandiert wird, und einen ersten Satz Schultern an einem vorderen Ende des Rohrsitzes (5) hat; und
g) einen automatischen Dichtungsmechanismus (2, 3, 4, 6, 9, 10 und 11);
wobei der Akkumulator **dadurch gekennzeichnet ist, dass**:
der automatische Dichtungsmechanismus (2, 3, 4, 6, 9, 10 und 11) einen pfeilförmigen Ventilkegel (3), der einen Schaft, einen Kontaktstift (2) und ein äußeres Schwanzende in einer axialen Position gegenüber dem Kontaktstift (2) hat, wobei der Kontaktstift (2) in dem Schaft aufgenommen ist und mit einer inneren komprimierbaren Feder (4) verbunden ist und direkt gegenüber dem hinteren vorstehenden Zentrum (18) des Kolbens (1) liegt, wobei das äußere Schwanzende einen zweiten Satz von Schultern hat, die so angeordnet sind, dass sie in Kontakt mit dem ersten Satz Schultern am vorderen Ende des Rohrsitzes (5) kommen, wobei der zweite Satz Schultern einen Dichtungshalter (10) und eine Dichtung (9) umfasst, wobei die Dichtung so angeordnet ist, dass sie an dem ersten Satz Schultern (19) sitzt, wenn Gas in der Gaskammer (17) den Kolben axial treibt, um in Kontakt mit dem Kontaktstift (2) zu kommen und diesen in eine Richtung zu bewegen, um die innere komprimierbare Feder (4) zusammenzudrücken, wobei die genannte Bewegung des Kolbens (1) bewirkt, dass der Balg in seiner axialen Richtung in einem vorbestimmten Maß verformt wird;
wobei die Kompression der inneren komprimierbaren Feder (4) eine äußere Feder (6) komprimiert, die an dem äußeren Schwanzende des Ventilkegels (3) in einer axialen Position gegenüber dem Kontaktstift (2) befestigt ist, und die genannte Bewegung des Kolbens (1) das äußere Schwanzende derart schiebt, dass dieses an dem Rohrsitz (5) sitzt und diesen abdichtet, um eine geschlossene Position des automatischen Dichtungsmechanismus zu begrenzen, in welcher ein Fließen der Flüssigkeit aus der Flüssigkeitskammer (16) angehalten wird;
wobei der automatische Dichtungsmechanismus in seiner geschlossenen Position einen Teil der Flüssigkeit in der Flüssigkeitskammer (16) auf einen Bereich innerhalb des Balgs (8) beschränkt;
wobei die äußere Feder (6) so ausgebildet ist, dass sie als Rückstellfeder entgegen der inneren Feder (4) wirkt und ermöglicht, dass die Dichtung des Rohrsitzes (5) durch hydraulischen Druck von der Flüssigkeit geöffnet wird, wodurch der Balg (8) erweitert wird und den Kolben (1) in eine axiale Richtung schiebt, um das Gas in der Gaskammer (17) zu komprimieren.

2. Akkumulator umfassend:
a) ein hohles Gehäuse;
b) einen Kolben (1), der in dem Gehäuse angeordnet ist, wobei der Kolben (1) mit der Innenwand des Gehäuses fluchtet und durch einen O-Ring (13) abgedichtet ist;
c) wobei der Kolben (1) eine Gaskammer (17) von einer Flüssigkeitskammer (16) trennt;
d) wobei die Flüssigkeitskammer (16) von der Innenwand des Gehäuses und einer Rückwand des Kolbens (1) begrenzt ist, wobei die Rückwand des Kolbens ein vorstehendes Zentrum (18) hat;
e) wobei die Gaskammer (17) durch die Innenwand des Gehäuses und eine Vorderseite des Kolbens (1) begrenzt ist und mit einem komprimierten Gas gefüllt ist;
f) einen Rohrsitz (5), der eine Flüssigkeitsflussöffnung hat, die mit der Flüssigkeitskammer (16) in Verbindung steht und Flüssigkeit in die und aus der Flüssigkeitskammer (16) lässt, wobei der Rohrsitz (5) einen ersten Satz Schultern (19) an einem vorderen Ende des Rohrsitzes (5) hat, sowie
g) einen automatischen Dichtungsmechanismus (2, 3, 4, 6, 9, 10 bzw. 11);
wobei der Akkumulator **dadurch gekennzeichnet ist, dass**:
der automatische Dichtungsmechanismus (2, 3, 4, 6, 9, 10 bzw. 11) einen pfeilförmigen Ventilkegel (3), der einen Schaft, einen Kontaktstift (2) und ein äußeres Schwanzende in einer axialen Position gegenüber dem Kontaktstift (2) hat, wobei der Kontaktstift (2) in dem Schaft aufgenommen ist und mit einer inneren komprimierbaren Feder (4) verbunden ist und direkt gegenüber dem hinteren vorstehenden Zentrum (18) des Kolbens (1) ist, wobei das äußere Schwanzende einen zweiten Satz Schultern aufweist, die so angeordnet sind, dass sie in Kontakt mit dem ersten Satz Schultern am vorderen Ende des Rohrsitzes (5) kommen, wobei der zweite Satz Schultern einen Dichtungshalter (10) und eine Dichtung (9) aufweist, wobei die Dichtung so angeordnet ist, dass sie auf dem ersten Satz Schultern (19) sitzt, wenn Gas in der Gaskammer (17) den Kolben axial in Kontakt mit dem Kontaktstift (2) zwingt und diesen in eine Richtung bewegt, um die innere komprimierbare Feder (4) zu komprimieren, wobei die Bewegung des Kolbens (1) in einem vorbestimmten Maß erfolgt;
die Kompression der inneren komprimierbaren Feder (4) eine äußere Feder (6) komprimiert, die an dem äußeren Schwanzende des Ventilkegels (3) in einer axialen Position gegenüber dem Kontaktstift (2) befestigt ist, wobei die Bewegung des Kolbens (1) das äußere Schwanzende so schiebt, dass es an dem Rohrsitz (5) aufsitzt und dichtet, um eine geschlossene Position des automatischen Dichtungsmechanismus zu begrenzen, in welcher ein Fließen der Flüssigkeit aus der Flüssigkeitskammer (16) angehalten wird;
wobei der automatische Dichtungsmechanismus, in seiner geschlossenen Position, einen Teil der Flüssigkeit in der Flüssigkeitskammer (16) auf einen Bereich innerhalb der Flüssigkeitskammer (16) zwischen dem ersten Satz Schultern (19) und der Rückwand des Kolbens (1) begrenzt;
wobei die äußere Feder (6) so ausgebildet ist, dass sie als Rückstellfeder gegen die innere Feder (4) wirkt und um zu ermöglichen, dass die Dichtung des Rohrsitzes (5) durch hydraulischen Druck von der Flüssigkeit geöffnet werden kann, wodurch der Kolben (1) in eine axiale Richtung geschoben wird, um das Gas in der Gaskammer (17) zu komprimieren.

## Revendications

1. Un accumulateur comprenant:
a) un boîtier creux ;
b) un soufflet (8) placé à l'intérieur du boîtier, ledit soufflet comprenant un corps de soufflet ayant une première extrémité (14) et une deuxième extrémité (15), ladite première extrémité (14) étant fixée au boîtier et ladite deuxième extrémité (15) étant laissée se déplacer dans la direction axiale du boîtier ;
c) le soufflet (8) étant fixé à un piston (1) afin de fermer la deuxième extrémité (15) du corps de soufflet ;
d) une chambre à liquide (16) définie par une face intérieure dudit corps de soufflet et une paroi arrière dudit piston (1) et remplie par un liquide, ladite paroi arrière du piston (1) ayant un centre (18) en saillie ;
e) une chambre à gaz (17), définie par une face extérieure du corps de soufflet et ledit piston (1) et remplie d'un gaz comprimé ;
f) un siège de tube (5) ayant un orifice d'écoulement de liquide mis en communication avec la chambre de liquide (16) et permettant à du liquide présent dans la chambre à liquide de passer, lorsque le soufflet (8) est comprimé ou expansé, et un premier jeu d'épaulements à une extrémité avant dudit siège de tube (5) ; et
g) un mécanisme d'auto-étanchéité (2, 3, 4, 6, 9, 10 et 11) ;
l'accumulateur étant **caractérisé en ce que** :
le mécanisme à auto-étanchéité (2, 3, 4, 6, 9, 10 et 11) comprend un opercule (3) en forme de flèche, ayant une tige, un téton de contact (2) et une extrémité de queue extérieure en une position axiale opposée à celle du téton de contact (2), ledit téton de contact (2) étant logé dans la tige et relié à un ressort de compression (4) intérieur et étant directement opposé audit centre arrière en saillie (18) dudit piston (1), ladite extrémité de queue extérieure ayant un deuxième jeu d'épaulements agencé pour venir en contact avec le premier jeu d'épaulements à l'extrémité avant du siège de tube (5), le deuxième jeu d'épaulements comprenant un élément de retenue de joint d'étanchéité (10) et un joint d'étanchéité (9), le joint d'étanchéité étant agencé pour se monter sur ledit premier jeu d'épaulements (19), lorsque le gaz présent dans la chambre à gaz (17) force le piston à se déplacer axialement pour venir en contact avec et déplacer le téton de contact (2) dans une direction de compression du ressort de compression (4) intérieur, ledit déplacement du piston (1) provoquant la déformation du soufflet dans sa direction axiale, à un degré prédéterminé ;
la compression du ressort de compression intérieur (4) ayant comme effet de comprimer un ressort extérieur (6) fixé sur l'extrémité de queue extérieure de l'opercule (3) en une position axiale opposée à celle dudit téton de contact (2), et ledit déplacement du piston (1) ayant comme effet de pousser l'extrémité de queue extérieure pour se monter sur et isoler de façon étanche le siège de tube (5) pour définir une position fermée du mécanisme d'auto-étanchéité à laquelle du liquide cesse de s'écouler depuis la chambre à liquide (16) ;
ledit le mécanisme d'auto-étanchéité, à son état fermé, confinant une partie du liquide présent dans la chambre à liquide (16) à une région intérieure au soufflet (8) ;
ledit ressort extérieur (6) étant agencé pour agir en tant que ressort de rappel en opposition à l'action dudit ressort intérieur (4) et pour permettre au dispositif d'étanchéité du siège de tube (5) d'être ouvert sous l'effet de la pression hydraulique provenant du liquide, de manière que le soufflet (8) s'expanse et pousse le piston (1) en direction axiale pour comprimer le gaz dans ladite chambre à gaz (17),

2. Un accumulateur comprenant :
a) un boîtier creux ;
b) un piston (1) placé à l'intérieur du boîtier, ledit piston (1) étant en alignement avec la paroi intérieure dudit boîtier et isolé de façon étanche par un élément torique (13) ;
c) ledit piston (1) séparant une chambre à gaz (17) d'une chambre à liquide (16);
d) ladite chambre à liquide (16) étant définie par la paroi intérieure du boîtier et une paroi arrière dudit piston (1), ladite paroi arrière dudit piston ayant un centre (18) en saillie ;
e) ladite chambre à gaz (17) étant définie par la paroi intérieure dudit boîtier et un côté avant dudit piston (1) et chargée par du gaz comprimé;
f) un siège de tube (5) ayant un orifice d'écoulement de liquide mis en communication avec la chambre de liquide (16) et permettant à du liquide de pénétrer et de sortir de la chambre de liquide (16), ledit siège de tube (5) ayant un premier jeu d'épaulements (19) à une extrémité avant dudit siège de tube (5), et
g) un mécanisme d'auto-étanchéité (2, 3, 4, 6, 9, 10 et 11) ;
l'accumulateur étant **caractérisé en ce que** :
le mécanisme à auto-étanchéité (2, 3, 4, 6, 9, 10 et 11) comprend un opercule (3) en forme de flèche ayant une tige, un téton de contact (2) et une extrémité de queue extérieure en une position axiale opposée à celle du téton de contact (2), ledit téton de contact (2) étant logé dans la tige et relié à un ressort de compression (4) intérieur et étant directement opposé audit centre arrière en saillie (18) dudit piston (1), ladite extrémité de queue extérieure ayant un deuxième jeu d'épaulements agencés pour venir en contact avec le premier jeu d'épaulements à l'extrémité avant du siège de tube (5), le deuxième jeu d'épaulements comprenant un élément de retenue de joint d'étanchéité (10) et un joint d'étanchéité (9), le joint d'étanchéité étant agencé pour se monter sur ledit premier jeu d'épaulements (19), lorsque le gaz présent dans la chambre à gaz (17) force ledit piston à se déplacer axialement pour venir en contact avec et déplacer le téton de contact (2) dans une direction de compression du ressort de compression (4) intérieur, ledit déplacement du piston (1) se faisant à un degré prédéterminé ;
la compression du ressort de compression intérieur (4) ayant comme effet de comprimer un ressort extérieur (6), fixé sur l'extrémité de queue extérieure de l'opercule (3), en une position axiale opposée à celle dudit téton de contact (2), et ledit déplacement du piston (1) ayant comme effet de pousser l'extrémité de queue extérieure pour se monter sur et isoler de façon étanche le siège de tube (5) pour définir une position fermée du mécanisme d'auto-étanchéité, à laquelle l'écoulement du liquide depuis la chambre de liquide (16) est coupé ;
ledit le mécanisme d'auto-étanchéité, à son état fermé, confinant une partie du liquide présent dans la chambre à liquide (16) à une région intérieure à la chambre de liquide (16), entre le premier jeu d'épaulements (19) et la paroi arrière du piston (1) ;
ledit ressort extérieur (6) étant agencé pour agir en tant que ressort de rappel en opposition à l'action dudit ressort intérieur (4) et pour permettre au joint d'étanchéité du siège de tube (5) d'être ouvert sous l'effet de la pression hydraulique provenant du liquide, de manière que le piston (1) est poussé en direction axiale afin de comprimer le gaz présent dans ladite chambre à gaz (17).
